# EUROPEAN PATENT SPECIFICATION

(11) **EP 0 499 001 B1**
(45) Date of publication and mention of the grant of the patent: **08.03.1995**
(21) Application number: 91400207.6
(22) Date of filing: 29.01.1991
(51) Int. Cl.: B60R 25/02, B62D 1/18

(54) **Steering lock control device for a steering lock apparatus**
Steuereinrichtung für eine Lenkverriegelungsvorrichtung
Dispositif de commande de verrouillage de direction pour un appareil de blocage de la colonne de direction

(43) Date of publication of application: 19.08.1992
(73) Proprietor: VALEO SECURITE HABITACLE, 78290 Croissy-Sur-Seine (FR); INSTITUT MINORU DE RECHERCHE AVANCEE, 06560 Valbonne (FR); AISIN SEIKI KABUSHIKI KAISHA, Kariya City, Aichi-Ken 448 (JP); REGIE NATIONALE DES USINES RENAULT S.A., 92109 Boulogne Billancourt (FR)
(72) Inventor: Thiery, Alain, F-92130 Issy-les-Moulineaux (FR); Laville, François, F-78740 Evecquemont (FR); Ohara, Kohoki, Kariya-shi, Aichi 488 (JP); Mitsuta, Tatsumi, F-06560 Valbonne (FR)
(74) Representative: Ernst-Schonberg, Michel

(56) References cited:
- DE-A- 2 517 723
- US-A- 4 775 939
- US-A- 4 934 737
- PATENT ABSTRACTS OF JAPAN vol. 12, no. 137 (M-690) 26 April 1988,& JP-A-62 258 860 (AISIN SEIKI) 11 November 1987
- PATENT ABSTRACTS OF JAPAN vol. 12, no. 222 (M-712)(3069) 24 June 1988,& JP-A-63 20259 (FUJI HEAVY) 27 January 1988,

## Description

The present invention relates to a steering lock control device for a steering lock apparatus of an electric telescopic steering shaft.

There has been a steering lock apparatus utilizing the functions of a conventional electric telescopic steering shaft as set forth in Japanese Unexamined Patent Publication JP-A-62 258 860.

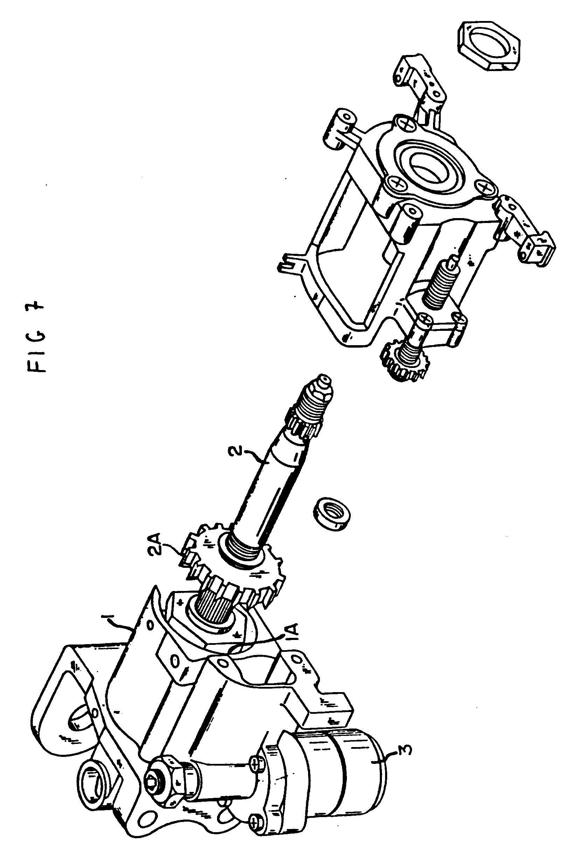

As illustrated in Figure 7, the conventional steering lock apparatus has a fixed bracket 1 fixed on a vehicle body, a steering shaft 2 inserted into and engaged with the fixed bracket 1 movably in the axial direction thereof and rotatably, at one end of which a steering wheel is installed, and a driving mechanism 3 installed on the fixed bracket 1 for moving the steering shaft 2 in the axial direction thereof.

A steering lock mechanism comprises an outer serration 2A formed on the outer periphery of the steering shaft 2 and an inner serration 1A formed on the inner periphery of the fixed bracket 1 and made engageable with the outer serration. When the driving mechanism 3 is operated to move the steering shaft 2 in the retract direction, namely when the steering shaft 2 is moved in the direction being pulled into the fixed bracket 1 and pulled to a predetermined position, the outer serration 2A engages with the inner serration 1A, whereby the steering shaft 1 is made unrotatable with respect to the fixed bracket 1. Accordingly, the steering wheel and the shaft are put into a lock state. Further, when driving a vehicle, in the case that the driving mechanism 3 is operated in the direction opposite to the above-mentioned direction, for instance, by a manual operation with a key and the steering shaft 2 is moved in the advance direction, namely in the case that the steering shaft 2 is moved in the direction protruding from the fixed bracket 1, the engagement between the outer serration 2A and the inner serration 1A is disengaged to release the lock state, thereby enabling the rotation of the shaft with the steering wheel.

However, there is a fear that the above-mentioned conventional steering lock apparatus locks a steering apparatus against the intention of a driver when the driving mechanism 3 is malfunctioned by a failure control circuit, a maloperation by a driver or the like. If such a malfunction should happen during driving, it would have been very dangerous.

The present invention has been developed in order to solve the above-mentioned disadvantages of the conventional steering lock apparatus. It is therefore an object of the present invention to provide a steering lock control device free from the fear for locking the steering apparatus due to the malfunction of the driving mechanism and the maloperation of a driver.

The present invention is a steering lock control device for achieving the above-mentioned object, and the steering lock control device is adapted for a steering lock apparatus for carrying out the advance and retract of a telescopic steering shaft with an electric mechanism and locking the steering shaft unrotatably by engaging the steering shaft when the steering shaft is retracted to a predetermined position. The steering lock control device is featured by an arrangement comprising:
a control means for receiving a signal output from an ignition switch depending on key conditions and a signal output from a manual switch for retracting the steering shaft, and transmitting an operational signal for operating the electric mechanism in the retract direction of the steering shaft depending on both of the signals;
a detection means for detecting whether the steering shaft is retracted to the predetermined position, thereby transmitting a detection signal; and
a first shut-off means between said control means and said electric mechanism for shutting off said operational signal output from said control means depending on said detection signal from said detection means, said signal from said ignition switch and said signal from said manual switch.

Further, another steering lock control device according to the present invention is featured by an arrangement comprising the above-mentioned control means:
a vehicle speed detection means for detecting vehicle speeds, thereby transmitting a vehicle speed signal when the vehicle speeds are a predetermined value or more; and
a second shut-off means between said control means and said electric mechanism, for shutting off said operational signal output from said control means depending on said vehicle speed signal from said vehicle speed detection means, said signal from said ignition switch and said signal from said manual switch.

According to the steering lock control device of the above-mentioned first mode, in the case that the key is inserted into the ignition switch and placed at an "ACC" position or an "ON" position and that the key conditions are input into the control means with the signal, the driving mechanism is operated in the retract direction to retract the steering shaft when the signal for retracting the steering shaft is input into the control control means from the manual switch. However, when the above-mentioned signal is input from the ignition switch, namely in the case that the key is left inserted into the ignition switch and the steering shaft is retracted to a lock range, the first shut-off means is actuated by the detection signal from the detection means before the steering shaft is moved thereto, and the operational signal output from the control means to the driving mechanism is shut off in between. Accordingly, in the case that the operational signal for retracting the steering shaft is kept output from the control means, the steering shaft can be prevented from retracting to the lock range and being locked by mistake.

Further, according to the steering lock control device of the above-mentioned second mode, in the case that the signal telling that the key is inserted into the ignition switch is output and the operational signal for retracting the steering shaft is output from the control means, the second shut-off means is similarly actuated by the vehicle speed signal output from the vehicle speed detection means and shuts off the operational signal output from the control means when a vehicle is travelling at a predetermined speed or more. Accordingly, the steering shaft can be prevented from retracting and being locked by mistake while the vehicle is travelling.

The present invention will be hereinafter described in detail with reference to a preferred embodiment illustrated in the accompanying drawings.

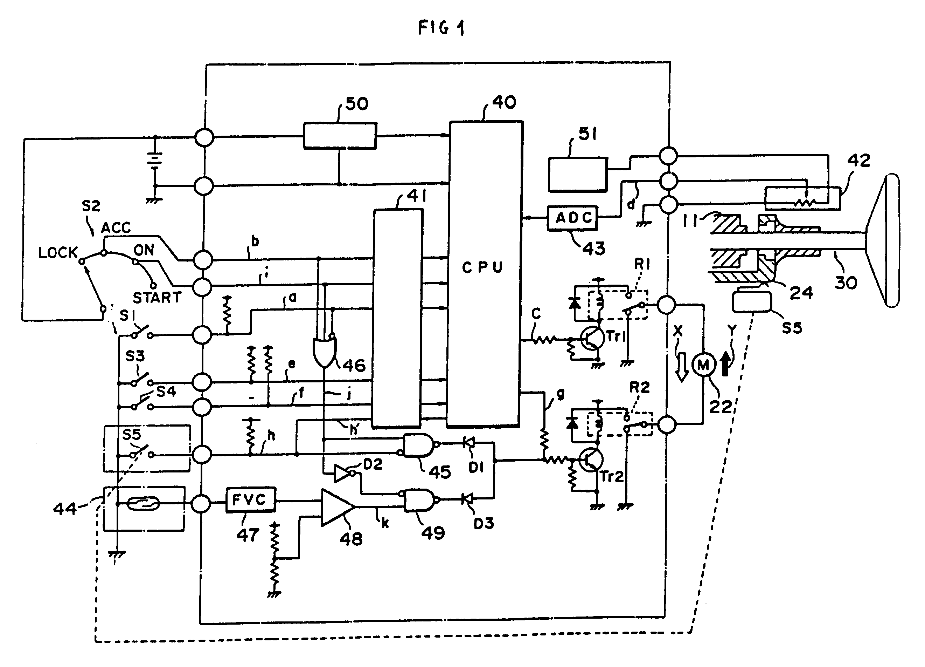

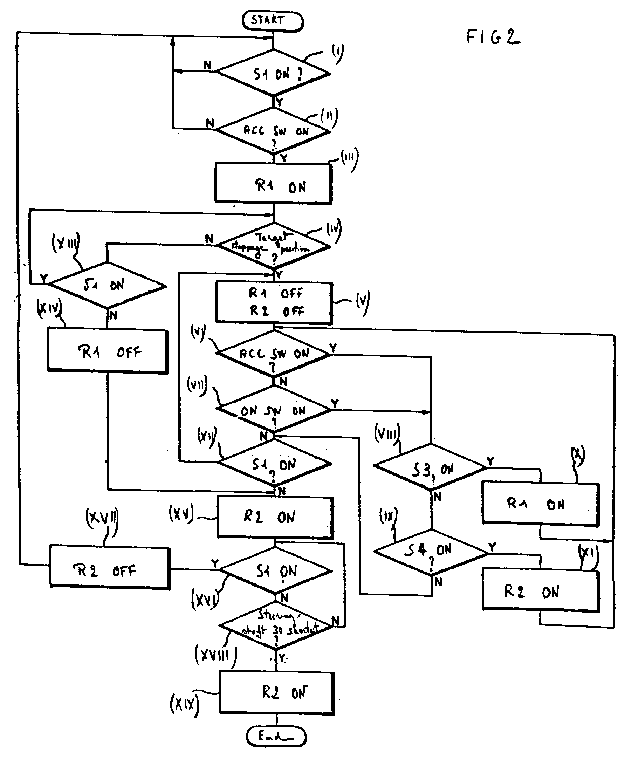

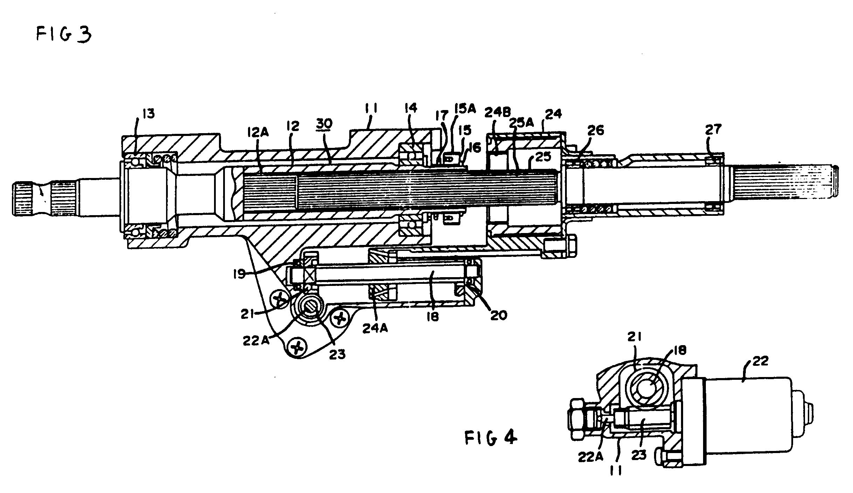

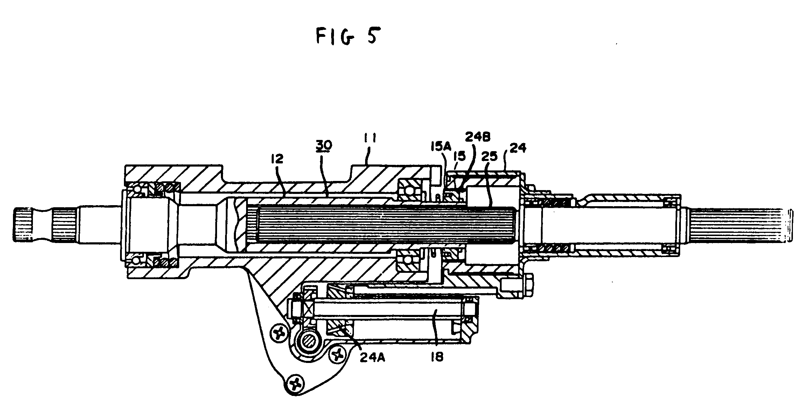

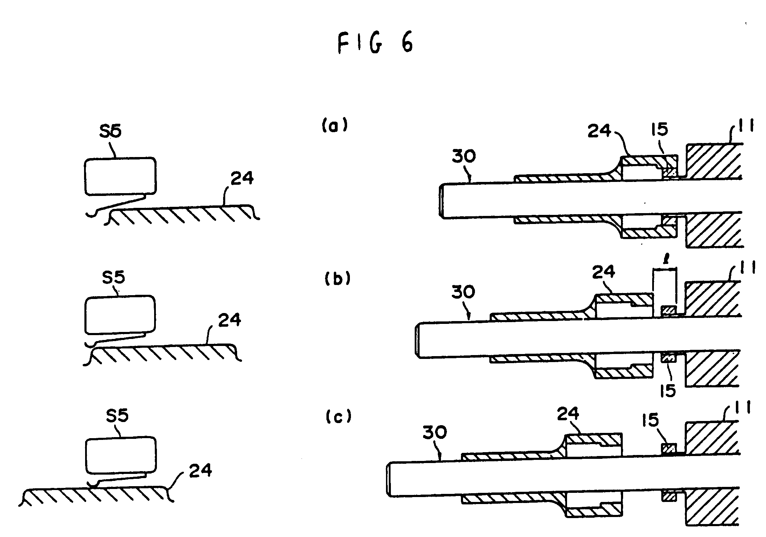

Figure 1 is a control circuit diagram illustrating a preferred embodiment according to the present invention. Figure 2 is a flow chart illustrating the operation of a CPU in the preferred embodiment. Figure 3 is a sectional side elevation view of an example of a steering lock apparatus which is to be connected with the present invention and which is in an unlock state. Figure 4 is a partial cross sectional view illustrating a driving mechanism of the steering lock apparatus. Figure 5 is another sectional side elevation view of the steering lock apparatus which is in a lock state. Figures 6 (a), 6 (b) and 6 (c) are explanatory views illustrating operating conditions of a short limit switch in the preferred embodiment according to the present invention. Figure 7 is a perspective view illustrating a conventional steering lock apparatus.

Figure 3 illustrates an example of a steering lock apparatus to which a steering lock control device of the present invention is connected. A shaft 12 is engaged with and inserted into a fixed bracket 11 to be fixed on a vehicle body, and held by bearings 13 and 14 disposed at both end portions of the fixed bracket 11 rotatably but unmovably in the axial direction thereof. The left side end portion of the shaft 12 in the drawing is connected to the wheel mechanism side.

Further, at the end portion of the shaft 12 protruding from the right side end surface of the fixed bracket 11 in the drawing, a lock block 15 is fixed in a manner rotatable together with the shaft 12, and an outer serration 15A is formed on the outer periphery thereof. The lock block 15 is prevented from coming off by a C-ring 16 fixed on the outermost end portion of the shaft 12. Furthermore, a spring 17 is disposed between the bearing 14 and the lock block 15, thereby urging the lock block 15 in the direction pressing to the C-ring 16. Here, the lock block 15 may be fixed integrally on the shaft 2. If such is the case, the spring 17 can be got rid of.

The right side end portion of the shaft 12 in the drawing is formed in a hollow shape, and opened at the right end surface thereof. Further, an inner serration 12A is formed on the inner periphery of the shaft 12.

On the outer wall portion of the fixed bracket 11, a screw shaft 18 is held by bearings 19 and 20 rotatably, whereby the screw shaft 18 is disposed concentrically with the shaft 12. At the end portion of the screw shaft 18, a worm wheel gear 21 is engaged so as to rotate together with the screw shaft 18. As illustrated in Figure 4, the worm wheel gear 21 is in mesh with a worm gear 23 fixed on a rotary shaft 22A of a motor 22 (an electric motor) extending in the direction perpendicular to the screw shaft 18. The motor 22 is also fixed on the outer wall portion of the fixed bracket 11. The screw shaft 18 is thus rotated by driving the motor 22.

On the right side outer periphery portion of the fixed bracket 11 in the drawing, a movable bracket 24 is engaged with the fixed bracket 11 movably in the coaxial direction. A nut portion 24A formed on the outer wall of the movable bracket 24 at the left side end portion in the drawing is screwed on the screw shaft 18. As the screw shaft 18 rotates, the nut portion 24A moves in the axial direction of the screw shaft 18, thereby advancing and retracting the movable disk 24 in the axial direction of the fixed bracket 11.

At the center portion of the movable bracket 24, a slide shaft 25 is engaged concentrically, and held rotatably but unmovably with respect to the movable bracket 24. On the left side outer periphery portion of the slide shaft 25 in the drawing, an outer serration 25A is formed. Further, the left end portion of the slide shaft 25 is engaged with and inserted into the right end portion of the shaft 12, and the outer serration 25A of the slide shaft 25 is in mesh with the inner serration 12A of the shaft 12, thereby connecting the slide shaft 25 slidably with respect to the shaft 12 in the axial direction and rotatably together with the shaft 12.

Here, the right end side portion of the slide shaft 25 in the drawing is made so that a steering wheel (not shown) is installable thereto. Thus, the slide shaft 25 and the shaft 12 constitute a telescopic steering shaft 30.

On the inner periphery portion of the left side end portion of the movable bracket 24 in the drawing, an inner serration 24B is formed, and the diameter thereof is identical with the outer serration 15A of the lock block 15. When the movable bracket 24 approaches the most to the fixed bracket 11, the inner serration 24B of the movable bracket 24 comes in mesh with the outer serration 15A of the lock block 15.

Figure 3 illustrates an unlock state, in which the steering wheel is rotatable. When the motor 22 is operated in one direction under the circumstance illustrated in Figure 3 in order to rotate a screw shaft 18 in one direction by way of the worm gear 23 and the worm wheel gear 21, the nut portion 24A moves along the axial direction of the screw shaft 18 in the right direction in the drawing, thereby sliding the slide shaft 25 integrally with the movable bracket 24 in the right direction in the drawing and advancing the telescopic steering shaft 30.

On the other hand, when the motor 22 is operated in the direction opposite to the above-mentioned direction, the screw shaft 18 is rotated in the direction opposite to the above-mentioned direction to move the nut portion 24A along the axial direction of the screw shaft 18 in the left direction in the drawing, thereby sliding the slide shaft 25 together with the movable bracket 24 in the left direction in the drawing and retracting the telescopic steering shaft 30.

In this way, the length of the steering shaft 30 can be adjusted by operating the motor 22 in both directions, whereby the positions of the steering wheel can be adjusted to positions appropriate for physical features of drivers.

Further, when locking the steering wheel, the motor 22 is rotated in the direction identical with the direction for reducing the length of the steering shaft 30, the nut portion 24A is moved and positioned at the left most position with respect to the screw shaft 18 in the drawing by the rotation of the screw shaft 18, thereby approaching the movable bracket 24 the closest with respect to the fixed bracket 11. At this moment, as illustrated in Figure 5, the lock block 15 is engaged with the inner periphery of the movable bracket 24 and the inner serration 24B and the outer serration 15A are in mesh, thereby connecting the shaft 12 unrotatably with respect to the movable bracket 24. Consequently, the shaft 12 and the slide shaft 25 is made unrotatable with respect to the movable bracket 24 and the fixed bracket 25, namely with respect to the vehicle body, and the steering wheel can be put into a lock state in which the steering wheel is made unrotatable.

Furthermore, in order to put the steering wheel into the unlock state from the lock state illustrated in Figure 5, the operation direction of the motor 22 is set in the direction for advancing the steering shaft 30, thereby moving the nut portion 24A from the position illustrated in Figure 5 in the right direction in the drawing with respect to the screw shaft 18. Thus, the movable bracket 24 is moved in the right direction in the drawing, namely in the direction getting away from the fixed bracket 11, thereby disengaging the mesh between the outer serration 15A of the lock block 15 and the inner serration 24B of the movable bracket 24 and making the steering wheel rotatable.

Figure 1 illustrates a control circuit diagram of a steering lock control device according to the present invention to be connected to the above-mentioned steering lock apparatus.

In Figure 1, when a key is inserted into an ignition key cylinder (not shown), a key insert switch S1 is turned on, whereby a key insert signal "a" is input into a CPU 40 (a control means) by way of an input processing circuit 41. Further, when the key is turned from a "LOCK" position to an "ACC" position illustrated in the diagram in order to start an engine, an "ACC" signal "b" is input from an ignition switch S2 into the CPU 40 by way of the input processing circuit 41.

When the CPU 40 detects the two inputs, i.e., the key insert signals "a" and the "ACC" signal "b", it outputs a relay R1 switching signal "c" to a transistor Tr1 to turn on a relay R1, thereby actuating the motor 22 (shown in Figure 4) in the steering shaft long direction "X".

The advance length of the steering shaft 30 is detected by a position detection sensor 42. The position detection sensor 42 is installed on the steering shaft 30, and outputs a position detection signal "d" corresponding to the position of the slide shaft 25. The position detection signal "d" output from the position detection sensor 42 is input into the CPU 40 by way of an AD converter "ADC". When the CPU 40 detects that the length of the steering shaft 30 reaches a predetermined length in accordance with the position detection signal "d" from the position detection sensor 42, it cuts off the relay R1 switching signal "c" to the transistor Tr1 to turn off the relay R1, thereby terminating the operation of the motor 22.

When the key is at the "ACC" position or an "ON" position of the ignition switch S2, and when a long switch S3 is turned on under the above-mentioned circumstance, a long signal "e" is input into the CPU 40 by way of the input processing circuit 41 and then the CPU 40 outputs the relay R1 switching signal "c" to turn on the relay R1, thereby actuating the motor 22 in the steering shaft long direction "X". When the long switch S3 is turned off, the CPU 40 cuts off the output of the relay R1 switching signal "c" to turn off the relay R1, thereby terminating the operation of the motor 22.

Further, when the short switch S4 is turned on, a short signal "f" is input into the CPU 40 by way of the input processing circuit 41 and then the CPU 40 outputs a relay R2 switching signal "g" to turn on a relay R2, thereby actuating the motor 22 in the steering shaft short direction "Y" opposite to the above-mentioned steering shaft long direction "X". When the short switch S4 is turned off, the CPU 40 cuts off the output of the relay R2 switching signal "g" to a transistor R2 to turn off the relay R2, thereby terminating the operation of the motor 22.

Furthermore, when the key is returned back to the "LOCK" position of the ignition switch S2, and when the key is removed therefrom, the key insert switch S3 is turned off. Then, the CPU 40 detects the interruption of the key insert signal "a", thereby outputting a relay R2 switching signal "g". Accordingly, the motor 22 is actuated in the steering shaft short direction "Y" by turning on the relay R2. When the CPU 40 detects that the steering shaft 30 is moved to a position giving it the shortest length in accordance with the detection signal "d" output from the position detection sensor 42, the CPU 40 cuts off the output of the relay R2 switching signal "g" in order to turn off the relay R2.

So far, the control circuit for unlocking the steering shaft 30, adjusting the length thereof and the locking thereof has been described.

In addition, a short limit switch S5 (a detection means) and a vehicle speed sensor 44 (a vehicle speed detection means) are connected to the above-mentioned control circuit.

The short limit switch S5 is disposed adjacent to the outer wall portion of the movable bracket 24. As illustrated in Figure 6 (a) and Figure 6 (b), the short limit switch S5 is turned on when the movable bracket 24 approaches the fixed bracket 11 and is in the lock range. As also illustrated in Figure 6 (c), the short limit switch S5 is turned off when the movable bracket 24 gets away from the fixed bracket 11 and is out of the lock range.

When the short limit switch S5 is turned on, namely when the movable bracket 24 approaches the lock range with respect to the fixed bracket 11, a short limit signal "h" is input into one of the input terminals of a NAND circuit 45. Moreover, the key insert signal "a" which is output when the key insert switch S1 is turned on and the "ACC" signal "b" or an "ON" signal "i" which is output when the key is either at the "ACC" position or the "ON" position of the ignition key switch S2 are input into an OR circuit 46. When one of these signals are input into the OR circuit 46, the OR circuit 46 outputs an "OR" signal "j" into the other input terminal of the NAND circuit 45.

The NAND circuit 45 outputs an "L" level output when the two signals, i.e., the short limit switch signal "h" and the "OR" signal "j", are input. When the NAND circuit 45 outputs the "L" level output, the relay R2 switching signal "g" output from the CPU 40 to the transistor Tr2 is absorbed by the NAND circuit 45 by way of the diode D1. Thus, the relay R2 is not turned on.

The vehicle speed sensor 44 outputs a periodic pulse to an FV converter (FVC) 47, and the FV converter 47 converts the pulse to a voltage to output it to a comparator 48 (a vehicle speed detection means). The comparator 48 outputs a vehicle speed signal "k" on an "H" level to one of the input terminals of a NAND circuit 49 when the vehicle speed is a predetermined vehicle speed or more.

Similarly to the NAND circuit 45, the "OR" signal "j" is output from the "OR" circuit 46 and input into the other input terminals of a NAND circuit 49 by way of the diode D2. When the two signals, i.e., the "OH" signal "j" and the vehicle speed signal "k", are input, the NAND circuit 49 outputs an "L" level output. At this moment, similarly to the NAND circuit 45, the relay R2 switching signal "g" output from the CPU 40 to the transistor Tr2 is absorbed by the NAND circuit 49 by way of the diode D3. Thus, the relay R2 is not turned on.

Here, the reference numerals "50" and "51" represent a constant voltage electric power source respectively in Figure 1.

Hereinafter, how the above-mentioned steering lock control device controls the operation of the steering lock apparatus will be described with reference to a flow chart illustrated in Figure 2.

In Figure 2, at step (i), the CPU 40 judges whether the key is inserted into the ignition switch S2 or not, namely whether the key insert switch S1 is turned on or not, in accordance with the key insert signal "a" input. In the case that the key insert switch S1 is turned on, at step (ii), the CPU 40 then judges whether the key is at the "ACC" position of the ignition switch S2 or not. In the case that the CPU 40 judges that the key is at the "ACC" position, at step (iii), the CPU 40 outputs the relay R1 switching signal "c" to the transistor Tr1 and turns it on, thereby switching and turning on the relay R1 and actuating the motor 22 in the steering shaft long direction "X".

By actuating the motor 22 in the steering shaft long direction "X", the movable bracket 24 is moved from the lock state illustrated in Figure 5 to the right in the drawing and disengaged from the engagement with the lock block 15. Accordingly, the steering shaft 30 is put into the unlock state as illustrated in Figure 3 and the axial length thereof is extended. Then, at step (vi), the CPU 40 judges whether the axial length of the steering shaft 30 reaches a predetermined length set in advance in accordance with the position detection signal "d" output from the position detection sensor 42. When the steering shaft 30 reaches the predetermined length, namely at step (v), the CPU 40 does not output the relay R1 switching signal "c" and the relay R2 switching signal "g" to turn off the relay R1, thereby terminating the operation of the motor 22.

Next, at steps (vi) and (vii), the CPU 40 judges whether the key is either at the "ACC" position or at the "ON" position of the ignition switch S2. In the case that the key is at either of the positions, the CPU 40 judges whether either of the long switch S3 or the short switch S4 is turned on or not at steps (viii) and (ix).

In the judgement at step (viii), when the CPU 40 judges that the long switch S3 is turned on, the CPU 40 outputs the relay R1 switching signal "c" to the transistor Tr1 while the long switch S3 is turned on. Accordingly, at step (x), the relay R1 is turned on, thereby actuating the motor 22 in the steering shaft long direction "X" and advancing the steering shaft 30.

Further, in the judgement at step (ix), when the CPU 40 judges that the short switch S4 is turned on, the CPU 40 outputs the relay R2 switching signal "g" to the transistor Tr2 while the short switch S4 is turned on. Accordingly, at step (xi), the relay R2 is turned on, thereby actuating the motor 22 in the steering shaft short direction "Y" and retracting the steering shaft 30.

In the judgements at steps (vi) and (vii), namely in the case that the CPU 40 judges that the key is not at the "ACC" position and at the "ON" position, the processing goes to step (xii). At step (xii), the CPU 40 then judges whether the key is inserted into the ignition switch S2 or not. Moreover, in the judgement at step (iv), when the CPU 40 judges that the axial length of the steering shaft 30 does not reach the predetermined length, the processing goes to step (xiii). At step (xiii), the CPU 40 judges whether the key is inserted into the ignition switch S2 or not. In the case that the CPU 40 judges that the key is not inserted thereinto, it cuts off the output of the relay R1 switching signal "c" to turn off the relay R1 at step (xiv).

In the case that the CPU 40 judges that the relay R1 switching signal "c" is cut off at step (xiv), and in the case that the CPU 40 judges that the key is not inserted into the ignition switch S2 at step (xii), the CPU 40 outputs the relay R2 switching signal "g" to the transistor Tr2 to turn on the relay R2 at step (xv), thereby actuating the motor 22 in the steering shaft short direction "Y" and retracting the steering shaft 30.

At this moment, namely when the CPU 40 judges that the key is inserted into the ignition switch S2 in the judgement at step (xvi) whether the key is inserted thereinto or not, the CPU 40 cuts off the output of the relay switching signal "g" to turn off the relay R2 at step (xvii), thereby terminating the operation of the motor 22. On the other hand, when the CPU 40 judges that the key has not been inserted into the ignition switch S2 yet in the judgement at step (xvi), the CPU 40 then judges whether the axial length of the steering shaft 30 is the shortest length in accordance with the position detection signal "d" output from the position detection sensor 42 at step (xviii).

In the judgement at step (xviii), when the CPU 40 judges that the axial length of the steering shaft 30 is the shortest length, namely when the CPU 40 judges that the outer serration 15A of the lock block 15 of the steering lock apparatus and the inner serration 24B of the movable bracket 24 thereof are in mesh and that the steering shaft 30 is in the lock state, i.e., the state illustrated in Figure 5, the CPU 40 cuts off the output of the relay R2 switching signal "g" to turn off the relay R2, thereby terminating the operation of the motor 22.

Meanwhile, when the short switch S4 is turned on by the manual operation of a driver at step (ix), the CPU 40 outputs the relay R2 switching signal "g" to turn on the relay R2 at step (xi), thereby actuating the motor 22 in the steering shaft short direction "Y". When the motor 22 is thus operated, and when the movable bracket 24 gets in the lock range with respect to the fixed bracket 11, the short limit switch S5 is turned on, and then the relay R2 switching signal "g" output from the CPU 40 by energizing the short limit switch S5 is absorbed by the NAND circuit 45. As a result, the relay R2 is turned off to terminate the operation of the motor 22. Accordingly, even in the case that the short switch S4 is kept turned on, there is no fear for locking the steering shaft 30 by the termination of the motor 22.

Further, even in the case that the short switch S4 is judged to be turned on by the malfunction of the CPU 40 and the relay R2 output signal "g" is output, the motor 22 is similarly terminated before the steering shaft 30 is locked.

Furthermore, while a vehicle is travelling, in the case that the key insert signal "a" output from the key insert switch S1 is not input into the CPU 40 due to some cause, for instance a trouble such as a breakdown cable and the like, the CPU 40 judges that the key is not input into the ignition switch S2 at step (xii) and outputs the relay R2 switching signal "g". However, when the vehicle is travelling at a predetermined vehicle speed or more, the vehicle speed sensor 44 detects the vehicle speed and the NAND circuit 49 absorbs the relay R2 switching signal "g" output from the CPU 40. Hence, there is no fear for actuating the motor 22 in the steering short direction "Y" by mistake and accordingly locking the steering shaft 30. Namely, the steering shaft 30 is prevented from being locked while the vehicle is travelling.

In addition to the above-mentioned preferred embodiment, in the case that the lock position of the steering shaft 30 is programmed into the CPU 40 in advance to have the CPU 40 output the short limit switch "h'" to the NAND circuit 45 in accordance with the signal from the position detection sensor 42, it is possible to effectively prevent the steering shaft 30 from being locked even when the short limit switch S5 is broken.

As having been described so far, according to the present invention, it is possible to effectively prevent the steering shaft from being locked by mistake even in the case that the maloperation occurred during the manual operation or in the case that the control means malfunctions. Therefore, the length of the steering shaft can be adjusted safely, and also a safe vehicle travelling can be achieved.

## Claims

1. A steering lock control device adapted for a steering lock apparatus, said steering lock apparatus carries out the advance and retract of a telescopic steering shaft (30) with an electric mechanism (22) and locks said steering shaft (30) unrotatably by engaging said steering shaft (30) when said steering shaft (30) is retracted to a predetermined position, characterized in that it comprises:
a control means (40) for receiving a signal output (b,i) from an ignition switch (S2) depending on key conditions and a signal output (a) from a manual switch (S1) for retracting said steering shaft (30), and transmitting an operational signal (g) for operating said electric mechanism (22) in the retract direction of said steering shaft (30) depending on both of said signals;
a detection means (42, S5) for detecting whether said steering shaft is retracted to said predetermined position, thereby transmitting a detection signal (h); and
a first shut-off means (45, D1) between said control means and said electric mechanism for shutting off said operational signal output from said control means depending on said detection signal from said detection means, said signal from said ignition switch and said signal from said manual switch.

2. A steering lock control device adapted for a steering lock apparatus, said steering lock apparatus carries out the advance and retract of a telescopic steering shaft (30) with an electric mechanism (22) and locks said steering shaft (30) unrotatably by engaging said steering shaft (30) when said steering shaft is retracted to a predetermined position, characterized in that it comprises:
a control means (40) for receiving a signal output (b, i) from an ignition switch (S2) depending on key conditions and a signal output (a) from a manual switch (S1) for retracting said steering shaft (30), and transmitting an operational signal (g) for operating said electric mechanism (22) in the retract direction of said steering shaft (30) depending on both of said signals from said ignition switch and from said manual switch;
a vehicle speed detection means (44) for detecting vehicle speeds, thereby transmitting a vehicle speed signal (k) when said vehicle speeds are a predetermined value or more ; and
a second shut-off means (49, D3) between said control means and said electric mechanism, for shutting off said operational signal output from said control means depending on said vehicle speed signal from said vehicle speed detection means, said signal from said ignition switch and said signal from said manual switch.

## Patentansprüche

1. Steuereinrichtung für eine Lenkverriegelungsvorrichtung, wobei die Lenkverriegelungsvorrichtung den Vor- und Rückschub einer Teleskop-Lenksäule 30 bewirkt, mittels eines elektrischen Mechanismus 22 und dabei die Lenksäule 30 gegen Verdrehung verriegelt, wenn die Lenksäule 30 in eine vorgegebene Stellung zurückgezogen worden ist, dadurch gekennzeichnet, daß sie aufweist:
eine Steueranordnung (40) zum Empfang eines Ausgangssignals (b, i) von einem Zündschalter (S2) als Funktion von Schlüsselstellungen und eines Ausgangssignals (a) von einem manuellen Schalter S1 zum Zurückziehen der Lenksäule (30) und zum Übertragen eines Betätigungssignals zum Betätigen des elektrischen Mechanismus (22) in Rückschubrichtung der Lenksäule (30) in Abhängigkeit von den beiden Signalen;
eine Meßanordnung (42, S5) zur Messung, ob die Lenksäule in die vorgegebene Stellung zurückgezogen worden ist und zur Übertragung des Meßsignals "h"; und
eine erste Abschaltanordnung (45, D1) zwischen der Steueranordnung und dem elektrischen Mechanismus zum Abschalten des Betätigungssignals, das von der Steueranordnung als Funktion des Meßsignals der Meßanordnung, des Signals des Zündschalters und des Signals des manuellen Schalters abgegeben wird.

2. Steuereinrichtung für eine Lenkverriegelungsvorrichtung, wobei die Lenkverriegelungsvorrichtung den Vor- und Rückschub einer Teleskop-Lenksäule (30) bewirkt, mittels eines elektrischen Mechanismus (22) und dabei die Lenksäule (30) gegen Verdrehung verriegelt, wenn die Lenksäule (30) in eine vorgegebene Stellung zurückgezogen worden ist, dadurch gekennzeichnet, daß sie aufweist:
eine Steueranordnung (40) zum Empfang eines Ausgangssignals (b, i) von einem Zündschalter (S2) als Funktion von Schlüsselstellungen und eines Ausgangssignals (a) von einem manuellen Schalter (S1), zum Zurückziehen der Lenksäule (30) und zum Übertragen eines Betätigungssignals (g), zum Betätigen des elektrischen Mechanismus (22) in die Rückschubrichtung der Lenksäule in Abhängigkeit von den Signalen vom Zündschalter und vom manuellen Schalter;
eine Fahrzeuggeschwindigkeitsmeßanordnung (44) zur Messung von Fahrzeuggeschwindigkeiten und zum Übertragen des Fahrzeuggeschwindigkeitssignals (k), wenn die Fahrzeuggeschwindigkeit einen vorgegebenen Wert erreicht oder überschreitet; und
eine zweite Abschaltanordnung (49, D3) zwischen der Steueranordnung und dem elektrischen Mechanismus zum Abschalten des Betätigungssignals, das von der Steueranordnung als Funktion des Meßsignals der Meßanordnung, des Signals des Zündschalters und des Signals des manuellen Schalters abgegeben wird.

## Revendications

1. Dispositif de commande de verrouillage de direction adapté pour un appareil de verrouillage de direction, ledit appareil de verrouillage de direction procèdant au déplacement vers l'avant et vers l'arrière d'un arbre de direction téléscopique (30) par l'intermédiaire d'un mécanisme électrique (22) et verrouillant ledit arbre de direction (30) de manière non rotative en mettant en prise ledit arbre de direction (30) lorsque ledit arbre de direction (30) est tiré vers l'arrière dans une position prédéterminée, caractérisé en ce que celui-ci comporte:
des moyens de commande destinés à recevoir un signal provenant d'un commutateur de contact fonction des états de la clé et un signal provenant d'un commutateur manuel destiné à tirer l'arbre de direction vers l'arrière, et à émettre un signal de commande pour actionner le mécanisme électrique dans la direction de retrait vers l'arrière de l'arbre de direction en fonction des deux signaux;
des moyens de détection destinés à détecter si l'arbre de direction est tiré vers l'arrière dans sa position prédéterminée, émettant par conséquent un signal de détection; et
des premiers moyens d'interruption situés entre lesdits moyens de commande et ledit mécanisme électrique pour interrompre ledit signal d'actionnement provenant desdits moyens de commande en fonction dudit signal de détection provenant desdits moyens de détection, dudit signal provenant dudit commutateur de contact et dudit signal provenant dudit commutateur manuel.

2. Dispositif de commande de verrouillage de direction adapté pour un appareil de verrouillage de direction, ledit appareil de verrouillage de direction procèdant au déplacement vers l'avant et vers l'arrière d'un arbre de direction télescopique (30) par l'intermédiaire d'un mécanisme électrique (22) et verrouillant ledit arbre de direction (30) de manière non rotative en mettant en prise ledit arbre de direction (30) lorsque ledit arbre de direction est tiré vers l'arrière vers une position prédéterminée, caractérisé en ce que celui-ci comporte:
des moyens de commande destinés à recevoir un signal provenant d'un commutateur de contact fonction des états de la clé et un signal provenant d'un commutateur manuel destiné à tirer l'arbre de direction vers l'arrière, et à émettre un signal de commande pour actionner le mécanisme électrique dans la direction de retrait vers l'arrière de l'arbre de direction en fonction des deux signaux;
des moyens de détection de la vitesse du véhicule destinés à détecter la vitesse du véhicule, émettant par conséquent un signal de vitesse du véhicule lorsque la vitesse du véhicule est située au niveau d'une valeur prédéterminée ou est située à une valeur supérieure; et
des seconds moyens d'interruption situés entre lesdits moyens de commande et ledit mécanisme électrique, pour interrompre ledit signal d'actionnement provenant desdits moyens de commande en fonction dudit signal de vitesse du véhicule provenant desdits moyens de détection de la vitesse du véhicule, dudit signal provenant dudit commutateur de contact et dudit signal provenant dudit commutateur manuel.
